# EUROPEAN PATENT SPECIFICATION

(11) **EP 2 168 305 B1**
(45) Date of publication and mention of the grant of the patent: **21.10.2015**
(21) Application number: 08753668.6
(22) Date of filing: 23.05.2008
(51) Int. Cl.: H04L 12/28

(54) **METHOD OF RECEIVING/TRANSMITTING EVENT MESSAGE, CONTROLLED DEVICE, AND CONTROL POINT**
VERFAHREN ZUM EMPFANGEN/SENDEN EINER EREIGNISNACHRICHT, GESTEUERTE EINRICHTUNG UND STEUERPUNKT
PROCÉDÉ DE RÉCEPTION ET D'ÉMISSION DE MESSAGE D'ÉVÉNEMENT, DISPOSITIF COMMANDÉ, ET POINT DE COMMANDE

(30) Priority: 22.06.2007 US 945716 P; 12.02.2008 KR 20080012615
(43) Date of publication of application: 31.03.2010
(73) Proprietor: Samsung Electronics Co., Ltd., Suwon-si, Gyeonggi-do, 443-742 (KR)
(72) Inventor: JUNG, Dong-Shin, Suwon-si Gyeonggi-do 441-718 (KR); VEDULA, Bharadwaj Kiran, Bangalore Karnataka 560093 (IN); KRISHNAMOORTHY, Subramanian, Bangalore Karnataka 560093 (IN); SREEKANTH, Channakeshava Siddapur, Bangalore Karnataka 560093 (IN)
(74) Representative: Grünecker Patent- und Rechtsanwälte PartG mbB
(86) International application number: PCT/KR2008/002880
(87) International publication number: WO 2009/002016

(56) References cited:
- WO-A1-2006/056919
- WO-A1-2007/004754
- US-A1- 2004 139 177
- US-A1- 2005 114 491
- US-A1- 2006 293 033
- US-B1- 6 779 004
- US-B1- 7 085 814
- US-B2- 7 130 895
- DONG-OH KANG ET AL: "UPnP AV architectural multimedia system with an OSGi platform", CONSUMER ELECTRONICS, 2004 IEEE INTERNATIONAL SYMPOSIUM ON READING, UK SEPT. 1-3, 2004, PISCATAWAY, NJ, USA,IEEE, PISCATAWAY, NJ, USA, 1 September 2004 (2004-09-01), pages 442-446, XP010755910, DOI: 10.1109/ISCE.2004.1375985 ISBN: 978-0-7803-8527-6
- ROACH DYNAMICSOFT A B: "Session Initiation Protocol (SIP)-Specific Event Notification; rfc3265.txt", 20020601, 1 June 2002 (2002-06-01), XP015009043, ISSN: 0000-0003

## Description

Apparatuses and methods consistent with the present invention relate to a home network, and more particularly, to a Universal Plug and Play (UPnP) based event message transmitting method, a UPnP-based event message receiving method, a controlled device (CD), and a control point (CP).

Generally, a home network is a private network based on an Internet protocol (IP), which networks and controls all types of personal computers (PCs) and various apparatuses, such as intelligent products, wireless devices, etc., used in a house, via a common virtual computing environment called middleware.

Middleware connects various digital apparatuses together on a peer-to-peer basis in order to allow communication between the digital apparatuses. Home Audio Video Interoperability (HAVI), UPnP control devices, Java Intelligent Network Infra-structure (JINI), Home Wide Web (HWW), etc. have been currently proposed as examples of middleware.

Although a current operating system makes it much easier to install and set PC peripheral devices since it includes a Plug and Play (PnP) function, UPnP technology enables network devices, such as various home appliances, network printers, and Internet gates, to be networked, particularly, home networked, by extending this convenient PnP function to all types of networks on the basis of an Internet standard technology such as Transmission Control Protocol/Internet Protocol (TCP/IP), HypcrText Transfer Protocol (HTTP), and Extensible Markup Language (XML).

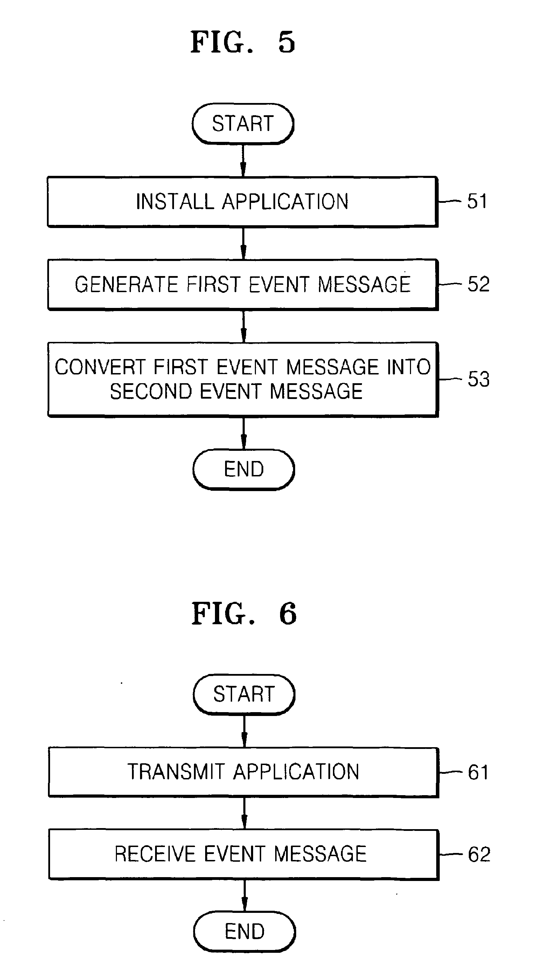

US 2005/114491 A1 discloses a SIP service for home network device and service mobility. It is suggested that by allowing an OSGi device's functionality to be exported into a mobile environment devices and services in a home environment gain network-independent service mobility. A bundle that communicates with a local UPnP device can export its "evented" state changes into mobile domain by implementing SIP event notification, which makes part of UPnP device functionality importable into other OSGi frameworks, as SIP Service allows SIP device importation. The gateway can download a requested bundle when it becomes necessary. To translate between diverse device frameworks, a so-called bridging bundle is needed to perform the application layer bridging. For example, a bridging bundle 52 between UPnP and SIP frameworks will utilize both, UPnP services 53 and SIP OSGi services 54 as shown in FIG. 5. It would obtain UPnP and SIP device reference objects and translate UPnP events Into SIP event notification, and vise-versa.

US 2006/293033 A1 discloses event moderation for event publishing environments. An event moderating architecture is disclosed for exporting event notification messages from an event publishing environment. An event moderation module receives a SIP subscription message from a mobile network device. To translate this subscription, the event moderation module first translates the subscription request into a state variable event template. The event template is defined as a placeholder for storing user customizable moderation parameters for events associated with a given UPnP service. One event template is preferably created per state variable subscription per user for a given UPnP service. Multiple subscriptions requests are handled through the use of multiple event templates

US 2004/0139177 A1 discloses a system and method for managing an application wherein a function of a controlled device can be dynamically extended by continually updating the application for use in the controlled device.

WO 2006/056919 relates to a method in a UPnP network where two control points are notified of events generated at the UPnP devices.

It is therefore the object of the present invention to provide an improved event message transmitting message in a controlled device, as well as a corresponding event message receiving message, a corresponding controlled device, a corresponding computer readable recoding medium and a corresponding system.

This object is solved by the subject matter of independent claims.

Preferred embodiments are defined by the dependent claims.

The present invention provides an event message transmitting method for adaptively transmitting information about a state change of a CD, which operates a predetermined execution environment, according to a network protocol, a computer readable recording medium having recorded thereon a program for executing the event message transmitting method, and the CP.

The present invention also provides an event message receiving method for adaptively receiving information about a state change of a CD, which operates a predetermined execution environment, according to a network protocol, a computer readable recording medium having recorded therein a program for executing the event message receiving method, and a CP.

### Advantageous Effects

According to the present invention, an application is received from a CP via a network according to a predetermined network protocol, the received application is installed according to a predetermined framework of an execution environment of a CD, a first event message that represents a state change of the application is generated according to the predetermined framework, and the first event message is converted into a second event message that conforms to the predetermined network protocol. Accordingly, information about a state change of a CD which operates in a predetermined execution environment can be adaptively transmitted according to a network protocol.

In addition, a CP receives information about a state change of the application from the CD and thus efficiently manages a life cycle of the application that includes, for example, installation, updating, and uninstallation of the application installed in the CD.

Moreover, although the CP does not send an explicit event message call for the state change of the application, the CD can transmit an event message asynchronously every time a state change occurs in the application.

### Description of Drawings

The above and other aspects of the present invention will become more apparent by describing in detail exemplary embodiments thereof with reference to the attached drawings in which:
FIG. 1 is a conceptual diagram illustrating a UPnP based eventing operation according to an exemplary embodiment of the present invention;
FIG. 2 illustrates a UPnP protocol stack which is used in a UPnP eventing process;
FIG. 3 is a block diagram of a CP and a CD illustrated in FIG. 1;
FIG. 4 is a block diagram of a CP and a CD according to an exemplary embodiment of the present invention;
FIG. 5 is a flowchart illustrating an event message transmitting method according to an exemplary embodiment of the present invention; and
FIG. 6 is a flowchart illustrating an event message receiving method according to an exemplary embodiment of the present invention.

### Mode for Invention

Exemplary embodiments of the present invention will now be described more fully with reference to the accompanying drawings. Like reference numerals in the drawings denote like elements, and thus their description will be omitted.

UPnP will now be described before a description of exemplary embodiments of the present invention with reference to the accompanying drawings. A UPnP network includes a CD, which is connected to an IP based home network and controlled via the IP based home network, and a CP for controlling the CD via the IP based home network. The UPnP network uses a UPnP protocol stack architecture, which includes protocols of the IP suite such as TCP/IP and HTTP and technologies such as an XML and a simple object access protocol (SOAP) and thus allows the CP and the CD to communicate with each other by progressing through the following stages.

A first stage is an addressing operation, in which the CP and the CD are given respective IP addresses. When participating in a network, the CD receives its own IP address by using a dynamic host configuration protocol (DHCP), or is given an IP address by using an automatic IP function when the network has no DHCP servers.

A second stage is a discovery operation, in which the CP searches for the CD or the CD announces its own location. The discovery stage is performed using a simple service discovery protocol (SSDP). If the CD is added to the network, the CD transmits an alive message of an SSDP to the network by using an IP multicast function, and the CP receives the alive message and is thus aware of whether the CD exists. If the CP newly participates in the network, the CP multicasts a multicast-search (M-search) message of the SSDP to the network and CDs check the M-search message and thus send M-search response messages including information about the CDs themselves to the CP.

A third stage is a description operation, in which the CP checks the content of descriptions of the CDs. The CP checks the response message and, if necessary, may request the CDs for detailed information about the CDs themselves. In response to the request, the CDs transmit information about themselves in the form of an XML document.

A fourth stage is a control operation, in which the CP controls the CDs to operate. If the CP desires to control a CD, the CP sends a desired service based on detailed information about the CD to the CD by using a simple object access protocol (SOAP). The SOAP is an XML-based protocol which uses the HTTP in order to achieve a remote function call (RFC).

A fifth stage is an eventing operation, in which the CP receives event changes of the CDs. When it is desired to receive event messages from the CDs, the CP sends event subscription calls to the CDs. If the subscriptions are successful, the CDs transmit the event messages to the CP by using a general event notification architecture (GENA).

A sixth state is a presentation operation, in which the CP represents states of the CDs by using the HTML of the CDs.

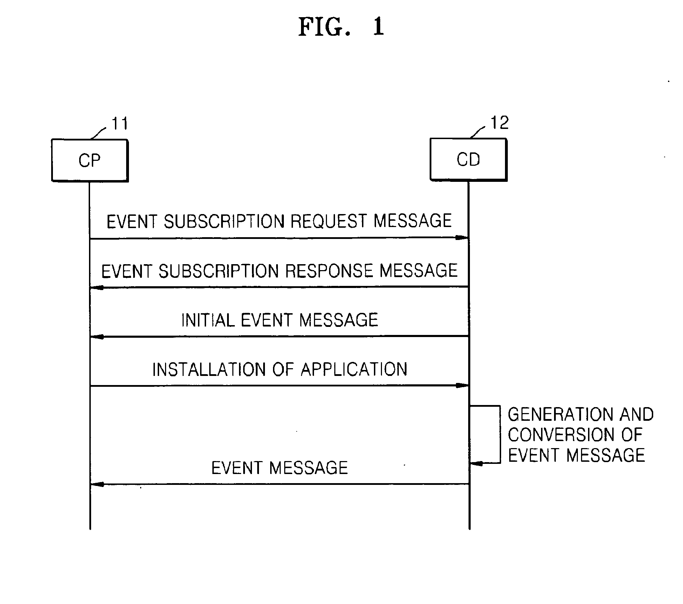

FIG. 1 is a conceptual diagram illustrating a UPnP based eventing operation according to an exemplary embodiment of the present invention.

Referring to FIG. 1, a CP 11 and a CD 12 communicate with each other according to a UPnP based protocol. The CD 12 operates in an OSGi based framework. However, the exemplary embodiment of the present invention is not limited to this protocol and this framework. In other words, the CP 11 and the CD 12 may communicate with each other according to a protocol based on JINI, HAVi, or others, and the CD 12 may operate in various other frameworks.

The OSGi framework, which is a kind of middleware framework implemented in a JAVA environment, is standard technology with respect to a service environment. A unit in which the OSGi framework is performed is a bundle, and the OSGi framework manages these bundles. The OSGi framework provides an execution environment where the bundles can be installed, updated, and uninstalled.

When the CP 11 wants to receive a state change of a service which is provided by the CD 12, the CP 11 transmits an event subscription request message that requests a subscription for an event reporting state changes of services, to the CD 12 via a network. Then, after receiving the event subscription request message, the CD 12 transmits an event subscription response message that represents that the subscription of the CP 11 to the event has succeeded, to the CP 11. Thereafter, the CD 12 transmits an initial event message including current values of state variables that indicate the states of a service, to the CP 11.

Next, the CP 11 transmits an application to the CD 12 in order to install the application in the CD 12. Then, the CD 12 generates an event message in the OSGi framework, the event message including information about a state change of the application, in an application installing stage and converts the format of the event message into a format suitable for UPnP.

Then, the CD 12 transmits the event message having the format suitable for UPnP to the CP 11. Accordingly, the CP 11 can recognize the state change of the application installed in the CD 12.

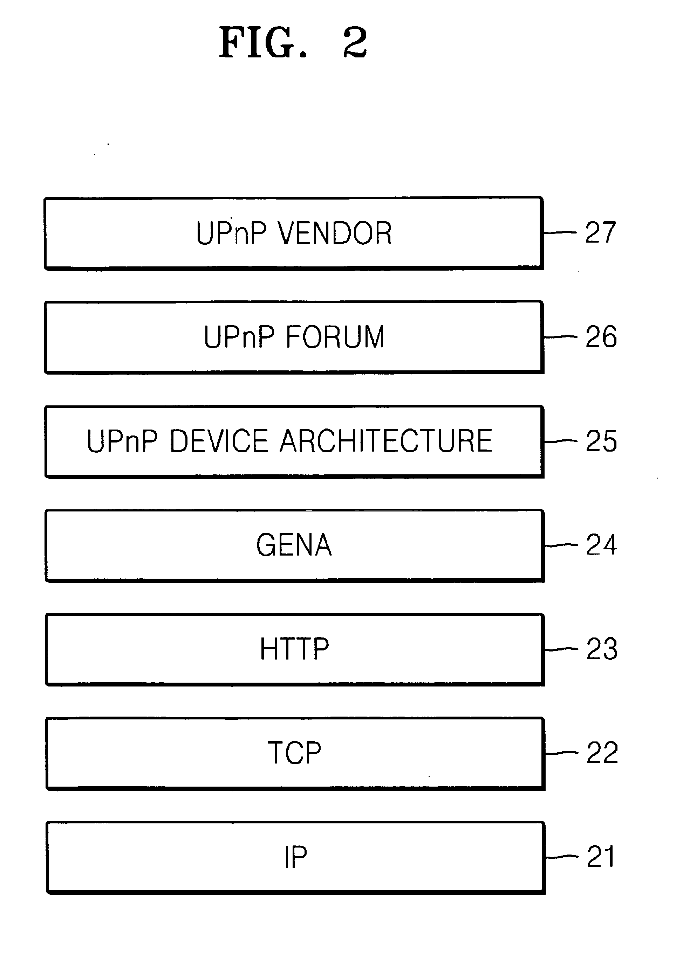

FIG. 2 illustrates a UPnP protocol stack which is used in a UPnP eventing process. Referring to FIG. 2, the UPnP protocol stack includes open type standard protocols, a GENA 24, a UPnP device architecture 25, a UPnP forum 26, and a UPnP vendor 27. The open type standard protocols are an IP 21, a transmission control protocol (TCP) 22, and a HTTP 23.

The UPnP vendor 27 denotes a protocol for detailed information about each device and a definition of each device. The UPnP forum 26 denotes a protocol for a detailed specification (e.g., service identifiers or variable names) of each device group. The UPnP device architecture 25 is an upper layer protocol of the UPnP forum 26. The GENA 24 denotes a protocol defined so as to provide a function of transceiving a notification. The HTTP 23 is a protocol for composing data according to a transmission protocol. The TCP 22 is a protocol for dividing data into packets or combining packets into data. The IP 21 is a protocol for transmitting packets. The TCP 22 and the IP 21 are used as basic protocols that provide network connectivity between UPnP devices.

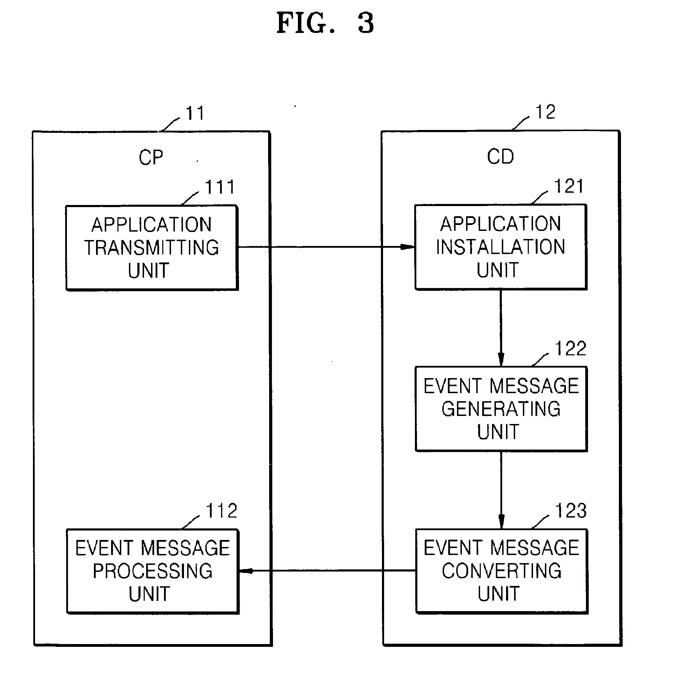

FIG. 3 is a block diagram of the CP 11 and the CD 12 illustrated in FIG. 1. Referring to FIG. 3, the CP 11 controls the CD 12 according to a UPnP-based network protocol and includes an application transmitting unit 111 and an event message processing unit 112. For convenience of explanation, it is assumed that the CP 11 has already sent a subscription message to the CD 12.

When the CP 11 desires to install an application in the CD 12, the application transmitting unit 111 transmits the application to the CD 12. The event message processing unit 112 requests a suitable action or performs a suitable operation according to an event message received from the CD 12.

Although not shown in FIG. 3, the CP 11 may further include an application storage unit (not shown) so as to previously store the application. In this case, the application transmitting unit 111 transmits the application previously stored in the application storage unit to the CD 12. If the CP 11 includes no application storage units, the application transmitting unit 111 receives the application from a separate device such as a contents server and transmits the received application to the CD 12.

The CD 12 operates in an OSGi framework, and is controlled by the CP 11 according to the UPnP-based network protocol. The CD 12 includes an application installation unit 121, an event message generating unit 122, and an event message converting unit 123.

The application installation unit 121 installs the application received from the application transmitting unit 111 of the CP 11. In this case, since the CD 12 operates in the OSGi framework, the application which is installed by the application installation unit 121 corresponds to a bundle. Another bundle may be needed to properly install the former bundle, and the former bundle may be in an installed state or a resolved state according to whether the latter bundle exists. However, the state of the application is not limited to the installed or resolved state, but the application may be in one of a plurality of states.

More specifically, a second bundle may be needed in order to properly install a first bundle. The state of the first bundle may vary according to the existence or absence of the second bundle. When a bundle is installed onto the framework the bundle moved to an installed state. The framework will then try to resolve the bundle. When the second bundle that is needed to properly install the first bundle does not exist, the state of the first bundle may remain in an installed state. On the other hand, when the second bundle which is needed to properly install the first bundle exists, the state of the first bundle may move into a resolved state. More specifically, if the second bundle does not exist when the first bundle starts to be installed by the application installation unit 121, the first bundle remains in the installed state. At this time, the installation of the first bundle has not been completed, and thus the CP 11 cannot start the first bundle. On the other hand, when the second bundle exists and thus the installation of the first bundle by the application installation unit 121 is completed, the first bundle moves into the resolved state. At this time, the CP 11 can start the first bundle.

The event message generating unit 122 generates a first event message according to information about a state change of the application that occurs in the application installation unit 121 in the OSGi framework. More specifically, when a state change occurs in the application during installation of the application by the application installation unit 121, the event message generating unit 122 generates the first event message, which conforms to the format of the OSGi framework. In an exemplary embodiment, the first event message corresponds to a bundle event.

The event message converting unit 123 converts the first event message generated by the event message generating unit 122 into a second event message in a format suitable for a UPnP based network protocol. Accordingly, the event message converting unit 123 may convert the first event message generated in the OSGi framework into the second event message written in an XML of the format suitable for the UPnP based network protocol.

In a general network communication between the CP 11 and the CD 12, a request message and a response message that conform to a predetermined protocol are transmitted and received. If the CD 12 transmits a response message that does not conform to the predetermined protocol, although the response message is transmitted to the CP 11 via the network, the CP 11 may refuse to receive the response message. Accordingly, the event message converting unit 123 converts the first event message into the second event message written in the format suitable for the UPnP based network protocol, thereby preventing reception of the second event message from being refused by the CP 11.

Since FIG. 3 is a block diagram for describing an eventing operation between the CP 11 and the CD 12, only blocks used in the eventing operation are illustrated in FIG. 3. In other words, other blocks may be further included in the CP 11 and the CD 12 according to the stage in which the CP 11 and the CD 12 communicate with each other.

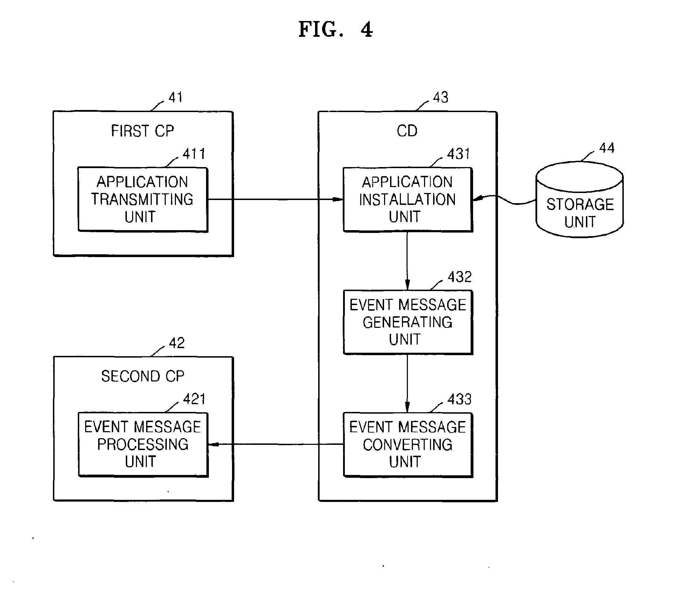

FIG. 4 is a block diagram of a first CP 41, a second CP 42, and a CD 43 according to an exemplary embodiment of the present invention. Referring to FIG. 4, the first CP 41 controls the CD 43 according to a UPnP-based network protocol and includes an application transmitting unit 411. For convenience of explanation, it is assumed that the first CP 41 has already sent a subscription message to the CD 43. The first CP 41 only transmits a first application. A device which desires to control an operation of the first application may be the second CP 42, not the first CP 41.

When the first CP 41 desires to install the first application in the CD 43, the application transmitting unit 411 transmits the first application including an address of the second CP 42 to the CD 43. The address of the second CP 42, which is an event subscription uniform resource locator (URL), may be stored in the form of a manifest file in the first application.

Although not shown in FIG. 4, the first CP 41 may further include an application storage unit (not shown) so as to previously store the application. In this case, the application transmitting unit 411 transmits the application previously stored in the application storage unit to the CD 43. If the first CP 41 includes no application storage units, the application transmitting unit 411 receives the application from a separate device such as a contents server and transmits the received application to the CD 43.

The CD 43 operates in an OSGi framework, and is controlled by the first and second CPs 41 and 42 according to the UPnP-based network protocol. The CD 43 includes an application installation unit 431, an event message generating unit 432, and an event message converting unit 433.

The application installation unit 431 installs the first application received from the application transmitting unit 411 of the first CP 41. In this case, since the CD 43 operates in the OSGi framework, the application which is installed by the application installation unit 431 corresponds to a bundle. Another bundle may be needed to properly install the former bundle, and the former bundle may be in an installed state or a resolved state according to whether the latter bundle exists. However, the state of the application is not limited to the installed or resolved state, but the application may be in one of a plurality of states.

More specifically, a second bundle may be needed in order to properly install a first bundle. The state of the first bundle may vary according to the existence or absence of the second bundle. When a bundle is installed onto the framework the bundle is moved to an installed state. The framework will then try to resolve the bundle. When the second bundle that is needed to properly install the first bundle does not exist, the state of the first bundle may remain in an installed state. On the other hand, when the second bundle, which is needed to properly install the first bundle, exists, the state of the first bundle may move into a resolved state. More specifically, if the second bundle does not exist when the first bundle starts to be installed by the application installation unit 431, the first bundle remains in the installed state. At this time, the installation of the first bundle has not been completed, and thus the second CP 42 cannot start the first bundle. On the other hand, when the second bundle exists and thus the installation of the first bundle by the application installation unit 431 is completed, the first bundle moves into the resolved state. At this time, the second CP 42 can start the first bundle.

A storage unit 44 stores a second application which is needed for the application installation unit 431 to properly install the first application. When the CD 43 does not store the second application, the application installation unit 431 may receive the second application from the storage unit 44 and thus complete installation of the first application.

The event message generating unit 432 generates a first event message according to information about a state change of the first application that occurs in the application installation unit 431 in the OSGi framework. More specifically, when a state change occurs in the first application during installation of the application by the application installation unit 431, the event message generating unit 432 generates the first event message, which conforms to the format of the OSGi framework. For example, the first event message corresponds to a bundle event.

The event message converting unit 433 converts the first event message generated by the event message generating unit 432 into a second event message in a format suitable for a UPnP based network protocol. Accordingly, the event message converting unit 433 may convert the first event message generated in the OSGi framework into the second event message written in an XML of the format suitable for the UPnP based network protocol.

In a general network communication between the first CP 41 or second CP 42, and the CD 43, a request message and a response message that conform to a predetermined protocol are transmitted and received. If the CD 43 transmits a response message that does not conform to the predetermined protocol, although the response message is transmitted to the first CP 41 or second CP 42 via the network, the first CP 41 or second CP 42 may refuse to receive the response message. Accordingly, the event message converting unit 433 converts the first event message into the second event message written in the format suitable for the UPnP based network protocol, thereby preventing reception of the second event message from being refused by the first CP 41 or second CP 42.

The CD 43 may include a mapping table about a plurality of applications and event subscription URLs corresponding to the applications. Accordingly, the event message converting unit 433 may transmit the second event message into which the first event message has been converted with reference to the mapping table, to a corresponding event subscription URL.

Since FIG. 4 is a block diagram for describing an eventing operation between the first CP 41 and second CP 42, and the CD 43, only blocks used in the eventing operation are illustrated in FIG. 2. In other words, other blocks may be further included in the first CP 41 and second CP 42, and the CD 43 according to the stage in which the first CP 41 and second CP 42, and the CD 43 communicate with each other.

FIG. 5 is a flowchart illustrating an event message transmitting method according to an exemplary embodiment of the present invention. Referring to FIG. 5, the event message transmitting method includes operations which are sequentially performed by the CD 12 of FIG. 3 or the CD 43 of FIG. 4. The above description of the CD 12 of FIG. 3 or the CD 43 of FIG. 4 is equally applied to the event message transmitting method of FIG. 5.

In operation 51, the application installation unit 121 installs the application received from the CP 11 according to the UPnP based network protocol.

In operation 52, the event message generating unit 122 generates a first event message including information about a state change of the application to the CP 11.

In operation 53, the event message converting unit 123 converts the first event message generated by the event message generating unit 122 into a second event message in a format suitable for the UPnP based network protocol. In this case, the event message converting unit 123 may transmit the second event message to the CP 11.

In an exemplary embodiment of the present invention, the application installation unit 121 may further perform an operation of receiving information about another CP which requests the information about the state change of the application from the CP 11. The event message converting unit 123 may further perform an operation of transmitting the second event message to the other CP.

FIG. 6 is a flowchart illustrating an event message receiving method according to an exemplary embodiment of the present invention. Referring to FIG. 6, the event message receiving method includes operations which are sequentially performed by the CP 11 of FIG. 3, or the first CP 41 and second CP 42 of FIG. 4. The above description of the CP 11 of FIG. 3 or the first CP 41 and second CP 42 of FIG. 4 is equally applied to the selective event message receiving method of FIG. 6.

In operation 61, the application transmitting unit 111 transmits an application to the CD 12, which operates in the OSGi framework, via the network according to the UPnP based network protocol.

In operation 62, the event message processing unit 112 receives an event message into which information about a state change of the application is converted in a format suitable for the UPnP based network protocol, from the CD 12. The event message processing unit 112 also requests a suitable action or performs a suitable operation according to a received event message.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the present invention as defined by the following claims.

## Claims

1. An event message transmitting method performed in a controlled device (43) which is controlled by a control point (41), the event message transmitting method comprising:
receiving an application from the control point via a network according to a network protocol;
installing (51) the received application according to a framework of an execution environment of the controlled device;
generating (52) a first event message which represents a state change of the application according to the framework;
converting (53) the first event message into a second event message which conforms to the network protocol;
receiving from the control point (41) information about an address of another control point (42) which requests information about the state change of the application from the control point; and
transmitting the second event message to the another control point.

2. The event message transmitting method of claim 1, wherein the information about the state change of the application varies according to the presence of another application during installation of the application.

3. The event message transmitting method of claim 1, wherein the network protocol is a Universal Plug and Play, UPnP, based network protocol, and the framework is an Open Service Gateway initiative, OSGi, based framework.

4. The event message transmitting method of claim 1, wherein the second event message is written in Extensible Markup Language, XML.

5. A computer readable recording medium having recorded thereon a program for executing an event message transmitting method performed in a controlled device (43) which is controlled by a control point (41), the event message transmitting method comprising:
receiving an application from the control point via a network according to a network protocol;
installing (51) the application according to a predetermined framework of an execution environment of the controlled device;
generating (52) a first event message which represents a state change of the application, according to the framework;
converting (53) the first event message into a second event message which conforms to the network protocol;
receiving from the control point (41) information about an address of another control point (42) which requests information about the state change of the application from the control point; and
transmitting the second event message to the another control point.

6. An event message receiving method comprising:
transmitting (61), from a first control point (41), an application to a controlled device (43) via a network according to a network protocol;
transmitting, from the first control point, information about an address of a second control point (42) which requests the information about the state change of the application; and
receiving (62), at the second control point (42), an event message which represents information about a state change of the application from the controlled device,
wherein the event message has been converted by the controlled device (43) according to the network protocol.

7. The event message receiving method of claim 6, wherein the information about the state change of the application varies according to the presence of another application during installation of the application.

8. The event message receiving method of claim 6, wherein the network protocol is a Universal Plug and Play, UPnP, based network protocol, and the framework is an Open Service Gateway initiative, OSGi, based framework.

9. The event message receiving method of claim 6, wherein the event message is written in Extensible Markup Language, XML.

10. A computer readable recording medium having recorded thereon a program for executing an event message receiving method comprising:
transmitting (61), from a first control point (41), an application to a controlled device (43) via a network according to a network protocol;
transmitting, from the first control point, information about an address of a second control point (42) which requests the information about the state change of the application; and
receiving (62), at the second control point (42), an event message which represents information about a state change of the application from the controlled device,
wherein the event message has been converted by the controlled device (43) according to the network protocol.

11. A controlled device (43) operating in an execution environment, the controlled device comprising:
an application installation unit (431) adapted to install an application received according to a network protocol from a first control point (41) adapted to control the controlled device;
an event message generating unit (432) adapted to generate information about a state change of the application as a first event message in the execution environment; and
an event message converting unit (433) adapted to convert the first event message into a second event message in a format suitable for the network protocol,
wherein the application installation unit is further adapted to receive from the first control point information about a second control point (42) requesting the information about the state change of the application from the first control point, and wherein the event message converting unit is further adapted to transmit the second event message to the second control point.

12. A system comprising a control point (41) for controlling a controlled device (43) according to a network protocol, the control point comprising:
an application transmitting unit (411) adapted to transmit an application to the controlled device when the control point requests installation of the application in the controlled device, and for transmitting together with the application an address of another control point (42) requesting information about the state change of the application, said information being received by the another control point (42) in an event message converted by the controlled device (43) to a format suitable for the network protocol.

## Patentansprüche

1. Ereignisnachrichtenübertragungsverfahren, das in einer gesteuerten Einrichtung (43) ausgeführt wird, die von einem Steuerpunkt (41) gesteuert ist, wobei das Ereignisnachrichtenübertragungsverfahren umfasst:
Empfangen einer Anwendung aus dem Steuerpunkt über ein Netzwerk gemäß einem Netzwerkprotokoll;
Installieren (51) der empfangenen Anwendung gemäß einer Plattform einer Ausführungsumgebung der gesteuerten Einrichtung;
Erzeugen (52) einer ersten Ereignisnachricht, die eine Zustandsänderung der Anwendung entsprechend der Plattform repräsentiert;
Umwandeln (53) der ersten Ereignisnachricht in eine zweite Ereignisnachricht, die mit dem Netzwerkprotokoll konform ist;
Empfangen einer Information von dem Steuerpunkt (41) über eine Adresse eines weiteren Steuerpunkts (42), der Information über die Zustandsänderung der Anwendung von dem Steuerpunkt anfordert; und
Übertragen der zweiten Ereignisnachricht zu dem weiteren Steuerpunkt.

2. Ereignisnachrichtenübertragungsverfahren nach Anspruch 1, wobei die Information über die Zustandsänderung der Anwendung entsprechend der Anwesenheit einer weiteren Anwendung während der Installation der Anwendung variiert.

3. Ereignisnachrichtenübertragungsverfahren nach Anspruch 1, wobei das Netzwerkprotokoll ein universales Einstecken-und Benutzen- (Universal Plug and Play-), UPnP, basiertes Netzwerkprotokoll ist und wobei die Plattform eine offene Dienst-Zugangsinitiative- (Open Service Gateway initiative), OSGi, basierte Plattform ist.

4. Ereignisnachrichtenübertragungsverfahren nach Anspruch 1, wobei die zweite Ereignisnachricht in erweiterbarer Markierungssprache (Extensive Markup Language), XML, geschrieben wird.

5. Computerlesbares Aufzeichnungsmedium mit einem darauf aufgezeichneten Programm zur Ausführung eines Ereignisnachrichtenübertragungsverfahrens, das in einer gesteuerten Einrichtung (43) ausgeführt wird, die von einem Steuerpunkt (41) gesteuert ist, wobei das Ereignisnachrichtenübertragungsverfahren umfasst:
Empfangen einer Anwendung aus dem Steuerpunkt über ein Netzwerk gemäß einem Netzwerkprotokoll;
Installieren (51) der empfangenen Anwendung gemäß einer Plattform einer Ausführungsumgebung der gesteuerten Einrichtung;
Erzeugen (52) einer ersten Ereignisnachricht, die eine Zustandsänderung der Anwendung entsprechend der Plattform repräsentiert;
Umwandeln (53) der ersten Ereignisnachricht in eine zweite Ereignisnachricht, die mit dem Netzwerkprotokoll konform ist;
Empfangen einer Information von dem Steuerpunkt (41) über eine Adresse eines weiteren Steuerpunkts (42), der Information über die Zustandsänderung der Anwendung von dem Steuerpunkt anfordert; und
Übertragen der zweiten Ereignisnachricht zu dem weiteren Steuerpunkt.

6. Ereignisnachrichtenempfangsverfahren mit:
Übertragen (61) einer Anwendung von einem ersten Steuerpunkt (41) zu einer gesteuerten Einrichtung (43) über ein Netzwerk gemäß einem Netzwerkprotokoll;
Übertragen, von dem ersten Steuerpunkt, von Information über eine Adresse eines zweiten Steuerpunkt (42), der die Information über die Zustandsänderung der Anwendung anfordert; und
Empfangen (62) einer Ereignisnachricht, die Information über eine Zustandsänderung der Anwendung repräsentiert, in dem zweiten Steuerpunkt (42) von der gesteuerten Einrichtung,
wobei die Ereignisnachricht von der gesteuerten Einrichtung (43) gemäß dem Netzwerkprotokoll umgewandelt worden ist.

7. Ereignisnachrichtenempfangsverfahren nach Anspruch 6, wobei die Information über die Zustandsänderung der Anwendung abhängig von dem Vorhandensein einer weiteren Anwendung während der Installation der Anwendung variiert.

8. Ereignisnachrichtenempfangsverfahren nach Anspruch 6, wobei das Netzwerkprotokoll ein universales Einstecken-und Benutzen- (Universal Plug and Play-), UPnP, basiertes Netzwerkprotokoll ist und wobei die Plattform eine offene Dienst-Zugangsinitiative- (Open Service Gateway initiative), OSGi, basierte Plattform ist.

9. Ereignisnachrichtenempfangsverfahren nach Anspruch 6, wobei die zweite Ereignisnachricht in erweiterbarer Markierungssprache (Extensive Markup Language), XML, geschrieben wird.

10. Computerlesbares Aufzeichnungsmedium mit einem darauf aufgezeichneten Programm zur Ausführung eines Ereignisnachrichtenempfangsverfahren, mit:
Übertragen (61) einer Anwendung von einem ersten Steuerpunkt (41) zu einer gesteuerten Einrichtung (43) über ein Netzwerk gemäß einem Netzwerkprotokoll;
Übertragen, von dem ersten Steuerpunkt, von Information über eine Adresse eines zweiten Steuerpunkt (42), der die Information über die Zustandsänderung der Anwendung anfordert; und
Empfangen (62) einer Ereignisnachricht, die Information über eine Zustandsänderung der Anwendung repräsentiert, in dem zweiten Steuerpunkt (42) von der gesteuerten Einrichtung,
wobei die Ereignisnachricht von der gesteuerten Einrichtung (43) gemäß dem Netzwerkprotokoll umgewandelt worden ist.

11. Gesteuerte Einrichtung (43), die in einer Ausführungsumgebung arbeitet, wobei die gesteuerte Einrichtung umfasst:
eine Anwendungsinstallationseinheit (431), die ausgebildet ist, eine Anwendung zu installieren, die gemäß einem Netzwerkprotokoll von einem ersten Steuerpunkt (41) empfangen wird, der ausgebildet ist, die gesteuerte Einrichtung zu steuern;
eine Ereignisnachrichten-Erzeugungseinheit (432), die ausgebildet ist, Information über eine Zustandsänderung der Anwendung als eine erste Ereignisnachricht in der Ausführungsumgebung zu erzeugen; und
eine Ereignisnachrichten-Umwandlungseinheit (433), die ausgebildet ist, die erste Ereignisnachricht in eine zweite Ereignisnachricht mit einem Format umzuwandeln, das für das Netzwerkprotokoll geeignet ist,
wobei die Anwendungsinstallationseinheit ferner ausgebildet ist, von dem ersten Steuerpunkt Information über einen zweiten Steuerpunkt (42) zu empfangen, der Information über die Zustandsänderung der Anwendung von dem ersten Steuerpunkt anfordert, und wobei die Ereignisnachrichten-Umwandlungseinheit ferner ausgebildet ist, die zweite Ereignisnachricht zu dem zweiten Steuerpunkt zu übertragen.

12. System mit einem Steuerpunkt (41) zur Steuerung einer gesteuerten Einrichtung (43) gemäß einem Netzwerkprotokoll, wobei der Steuerpunkt umfasst:
eine Anwendungsübertragungseinheit (411), die ausgebildet ist, eine Anwendung zu der gesteuerten Einrichtung zu übertragen, wenn der Steuerpunkt eine Installation der Anwendung in der gesteuerten Einrichtung anfordert, und zusammen mit der Anwendung eine Adresse eines weiteren Steuerpunkts (42), der Information über die Zustandsänderung der Anwendung anfordert, zu übertragen, wobei die Information von dem weiteren Steuerpunkt (42) in einer Ereignisnachricht empfangen wird, die von der gesteuerten Einrichtung (43) in ein Format umgewandelt wird, das für das Netzwerkprotokoll geeignet ist.

## Revendications

1. Procédé de transmission de message d'événement effectué dans un dispositif commandé (43) qui est commandé par un point de commande (41), le procédé de transmission de message d'événement comprenant :
recevoir une application à partir du point de commande par l'intermédiaire d'un réseau conformément à un protocole de réseau ;
installer (51) l'application reçue conformément à un cadre d'un environnement d'exécution du dispositif commandé ;
générer (52) un premier message d'événement qui représente un changement d'état de l'application conformément au cadre ;
convertir (53) le premier message d'événement en un deuxième message d'événement qui est conforme au protocole de réseau ;
recevoir à partir du point de commande (41) des informations sur une adresse d'un autre point de commande (42) qui demande des informations sur le changement d'état de l'application à partir du point de commande ; et
transmettre le deuxième message d'événement à l'autre autre point de commande.

2. Procédé de transmission de message d'événement selon la revendication 1, dans lequel les informations sur le changement d'état de l'application varient en fonction de la présence d'une autre application pendant l'installation de l'application.

3. Procédé de transmission de message d'événement selon la revendication 1, dans lequel le protocole de réseau est un protocole de réseau à base de prêt à l'emploi universel, soit UPnP (Universal Plug and Play), et le cadre est un cadre à base d'initiative de passerelle de service ouvert, soit OSGi (Open Service Gateway Initiative).

4. Procédé de transmission de message d'événement selon la revendication 1, dans lequel le deuxième message d'événement est écrit en langage de balisage extensible, soit XML (Extensible Markup Language).

5. Support d'enregistrement lisible par ordinateur sur lequel est enregistré un programme pour exécuter un procédé de transmission de message d'événement effectué dans un dispositif commandé (43) qui est commandé par un point de commande (41), le procédé de transmission message d'événement comprenant :
recevoir une application à partir du point de commande par l'intermédiaire d'un réseau conformément à un protocole de réseau ;
installer (51) l'application conformément à un cadre prédéterminé d'un environnement d'exécution du dispositif commandé ;
générer (52) un premier message d'événement qui représente un changement d'état de l'application, conformément au cadre ;
convertir (53) le premier message d'événement en un deuxième message d'événement qui est conforme au protocole de réseau ;
recevoir à partir du point de commande (41) des informations sur une adresse d'un autre point de commande (42) qui demande des informations sur le changement d'état de l'application à partir du point de commande ; et
transmettre le deuxième message d'événement à l'autre point de commande.

6. Procédé de réception de message d'événement comprenant :
transmettre (61), à partir d'un premier point de commande (41), une application à un dispositif commandé (43) par l'intermédiaire d'un réseau conformément à un protocole de réseau ;
transmettre, à partir du premier point de commande, des informations sur une adresse d'un deuxième point de commande (42) qui demande les informations sur le changement d'état de l'application ; et
recevoir (62), au deuxième point de commande (42), un message d'événement qui représente des informations sur un changement d'état de l'application à partir du dispositif commandé,
dans lequel le message d'événement a été converti par le dispositif commandé (43) conformément au protocole de réseau.

7. Procédé de réception de message d'événement selon la revendication 6, dans lequel les informations sur le changement d'état de l'application varient en fonction de la présence d'une autre application pendant l'installation de l'application.

8. Procédé de réception de message d'événement selon la revendication 6, dans lequel le protocole de réseau est un protocole de réseau à base de prêt à l'emploi universel, soit UPnP (Universal Plug and Play), et le cadre est un cadre à base d'initiative de passerelle de service ouvert, soit OSGi (Open Service Gateway Initiative).

9. Procédé de réception de message d'événement selon la revendication 6, dans lequel le deuxième message d'événement est écrit en langage de balisage extensible, soit XML (Extensible Markup Language).

10. Support d'enregistrement lisible par ordinateur sur lequel est enregistré un programme pour exécuter un procédé de réception de message d'événement comprenant :
transmettre (61), à partir d'un premier point de commande (41), une application à un dispositif commandé (43) par l'intermédiaire d'un réseau conformément à un protocole de réseau ;
transmettre, à partir du premier point de commande, des informations sur une adresse d'un deuxième point de commande (42) qui demande les informations sur le changement d'état de l'application ; et
recevoir (62), au deuxième point de commande (42), un message d'événement qui représente des informations sur un changement d'état de l'application à partir du dispositif commandé,
dans lequel le message d'événement a été converti par le dispositif commandé (43) conformément au protocole de réseau.

11. Dispositif commandé (43) fonctionnant dans un environnement d'exécution, le dispositif commandé comprenant :
une unité d'installation d'application (431) adaptée pour installer une application reçue conformément à un protocole de réseau à partir d'un premier point de commande (41) adapté pour commander le dispositif commandé ;
une unité de génération de message d'événement (432) adaptée pour générer des informations sur un changement d'état de l'application en tant que premier message d'événement dans l'environnement d'exécution ; et
une unité de conversion de message d'événement (433) adaptée pour convertir le premier message d'événement en un deuxième message d'événement dans un format approprié pour le protocole de réseau,
dans lequel l'unité d'installation d'application est en outre adaptée pour recevoir à partir du premier point de commande des informations sur un deuxième point de commande (42) demandant les informations sur le changement d'état de l'application à partir du premier point de commande, et dans lequel l'unité de conversion de message d'événement est en outre adaptée pour transmettre le deuxième message d'événement au deuxième point de commande.

12. Système comprenant un point de commande (41) pour commander un dispositif commandé (43) conformément à un protocole de réseau, le point de commande comprenant :
une unité de transmission d'application (411) adaptée pour transmettre une application au dispositif commandé lorsque le point de commande demande l'installation de l'application dans le dispositif commandé, et pour transmettre avec l'application une adresse d'un autre point de commande (42) demandant des informations sur le changement d'état de l'application, lesdites informations étant reçues par l'autre point de commande (42) dans un message d'événement converti par le dispositif commandé (43) en un format approprié pour le protocole de réseau.
